# EUROPEAN PATENT SPECIFICATION

(11) **EP 3 916 263 B1**
(45) Date of publication and mention of the grant of the patent: **12.06.2024**
(21) Application number: 21170184.2
(22) Date of filing: 23.04.2021
(51) Int. Cl.: F16D 55/224, B61H 5/00

(54) **BRAKE CALIPER**
BREMSSATTEL
ÉTRIER DE FREIN

(30) Priority: 26.05.2020 JP 2020091679
(43) Date of publication of application: 01.12.2021
(73) Proprietor: Nabtesco Corporation, Tokyo 102-0093 (JP)
(72) Inventor: OHNO, Tomoya, Tokyo (JP); UTSUMI, Takashi, Tokyo (JP)
(74) Representative: Grünecker Patent- und Rechtsanwälte PartG mbB

(56) References cited:
- WO-A1-2009/090011
- DE-A1-102011 014 261
- US-A- 4 454 932
- US-A- 5 058 712
- US-A1- 2020 124 119

## Description

The present invention relates to a brake caliper.

As disclosed in International Publication No. WO 2012/123316 ("the '316 Publication"), a caliper of a disc brake device includes two arms. Each of the two arms is coupled with a brake pad at one end thereof. A brake cylinder is provided between respective middle portions of the two arms. The brake cylinder includes a service brake and a parking brake. Furthermore, DE 10 2011 014 261 A1 discloses a brake caliper at least not having the features of the characterizing portion of claim 1.

In the brake caliper disclosed in the '316 Publication, the two arms are mounted to a caliper body that is suspended to a bogie, and the caliper body serves as a cylinder for both the service brake and the parking brake. Therefore, in repair or replacement of the service brake or the parking brake, the service brake or the parking brake cannot be readily removed and mounted. There is a demand for a caliper in which the brake cylinder can be readily removed and mounted. The same applies to calipers including at least one of the service brake and the parking brake.

The present invention is made in view of the foregoing, and one object of the present invention is to provide a brake caliper in which a brake cylinder can be readily removed and mounted.

In order to achieve the above object and in accordance with one aspect of the present invention, provided is a brake caliper that includes the features of claim 1.

In the above arrangement, the brake cylinder can be mounted to the suspended portion in the form of a brake cylinder. Therefore, it is not necessary to mount or remove each of the components of the brake cylinder, thus facilitating the mounting and removing works of the brake cylinder.

In the above brake caliper, the suspended portion includes: a rotation support portion that supports each of the pair of arms so as to be rotatable about a respective rotating shaft extending along a vertical direction orthogonal to a traveling direction of the bogie and an axial direction of the axle; a base portion that supports the rotation support portion so as to be swingable about a pivot shaft extending orthogonally to the axial direction of the axle of the bogie and along an extension direction of the pair of arms; and a plate portion connecting between a first side and a second side, the first side extending on the rotation support portion along an axial direction of the rotating shaft, the second side extending on the base portion along the pivot shaft, the plate portion having the at least one brake cylinder removably mounted thereto.

In the above brake caliper, it is preferable that at least one surface of the plate portion to which the at least one brake cylinder is mounted is perpendicular to the axle, the at least one brake cylinder includes a service brake cylinder and a parking brake cylinder, the service brake cylinder is mounted to one surface of the plate portion, and the parking brake cylinder is mounted to the other surface of the plate portion.

In the above brake caliper, it is preferable that at least one of an output shaft of the service brake cylinder and an output shaft of the parking brake cylinder penetrates an opening formed in the plate portion, and the output shaft of the service brake cylinder and the output shaft of the parking brake cylinder are positioned coaxially, and an output of the parking brake cylinder is transmitted to the service brake cylinder.

In the above brake caliper, it is preferable that a casing of the service brake cylinder and a casing of the parking brake cylinder are fitted together at the opening.

In the above brake caliper, it is preferable that the output shaft and an input shaft of the service brake cylinder project from opposite ends of the service brake cylinder, the input shaft of the service brake cylinder is fitted with the output shaft of the parking brake cylinder, and a portion of the input shaft of the service brake cylinder and a portion of the output shaft of the parking brake cylinder that are fitted together penetrate the opening and are supported by the plate portion.

In order to achieve the above object and in accordance with another aspect of the present invention, provided is a brake caliper that includes: a pair of arms each having a brake pad attached to one end thereof; at least one brake cylinder for outputting a force by which the pair of arms sandwich via the brake pad a disc mounted to an axle of a bogie; and a suspended portion that retains the pair of arms operatively and is connected with the bogie. The suspended portion includes: a rotation support portion that supports each of the pair of arms so as to be rotatable about a respective rotating shaft extending along a vertical direction orthogonal to a traveling direction of the bogie and an axial direction of the axle; a base portion that supports the rotation support portion so as to be swingable about a pivot shaft extending orthogonally to the axial direction of the axle of the bogie and along an extension direction of the pair of arms; and a plate portion connecting between a first side and a second side, the first side extending on the rotation support portion along an axial direction of the rotating shaft, the second side extending on the base portion along the pivot shaft, the plate portion having the at least one brake cylinder removably mounted thereto. At least one surface of the plate portion to which the at least one brake cylinder is mounted is perpendicular to the axle. The at least one brake cylinder includes a service brake cylinder and a parking brake cylinder. The service brake cylinder is mounted to one surface of the plate portion. The parking brake cylinder is mounted to the other surface of the plate portion. The output shaft of the service brake cylinder and the output shaft of the parking brake cylinder are positioned coaxially, and an output of the parking brake cylinder is transmitted to the service brake cylinder.

In the above arrangement, the brake cylinder can be mounted to the suspended portion in the form of a brake cylinder. Therefore, it is not necessary to mount or remove each of the components of the brake cylinder, thus facilitating the mounting and removing works of the brake cylinder. Further, since the service brake cylinder and the parking brake cylinder are mounted to opposite sides of the plate portion, the service brake cylinder and the parking brake cylinder can be separately mounted to and removed from respective mounting portions, thus facilitating the mounting and removing works of the brake cylinders.

Other aspects and advantages of the present invention will be made apparent from the following description, taken in conjunction with the accompanying drawings, illustrating by way of example the principles of the present invention.

The invention, together with objects and advantages thereof, may best be understood by reference to the following description of the presently preferred embodiments together with the accompanying drawings in which:
Fig. 1 is a perspective view showing a brake caliper of a first embodiment,
Fig. 2 is a sectional view showing the brake caliper of the first embodiment,
Fig. 3 is an exploded perspective view showing the brake caliper of the first embodiment,
Fig. 4 illustrates mounting and removing operation of a brake cylinder of the brake caliper of the first embodiment,
Fig. 5 is a fragmentary enlarged view showing movement of the brake cylinder of the brake caliper of the first embodiment,
Fig. 6 is a side view of the brake caliper of the first embodiment, showing transmission of a force in braking,
Fig. 7 is a sectional view showing the brake caliper of the first embodiment without a parking brake cylinder,
Fig. 8 is a sectional view showing a brake caliper of a second embodiment, and
Fig. 9 is a side view showing a brake caliper of a modification example.

### First Embodiment

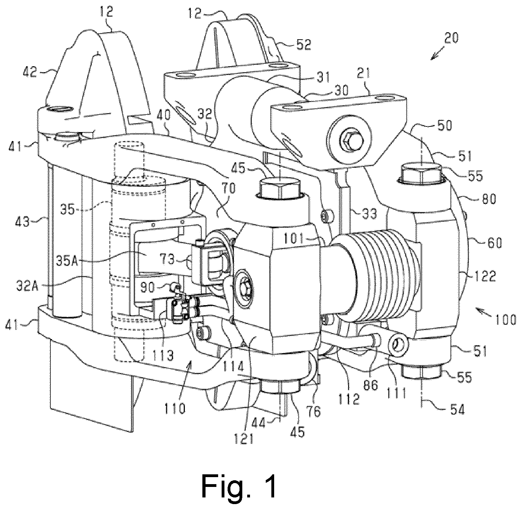

With reference to Figs. 1 to 7, a brake caliper of a first embodiment according to the present invention will now be described.

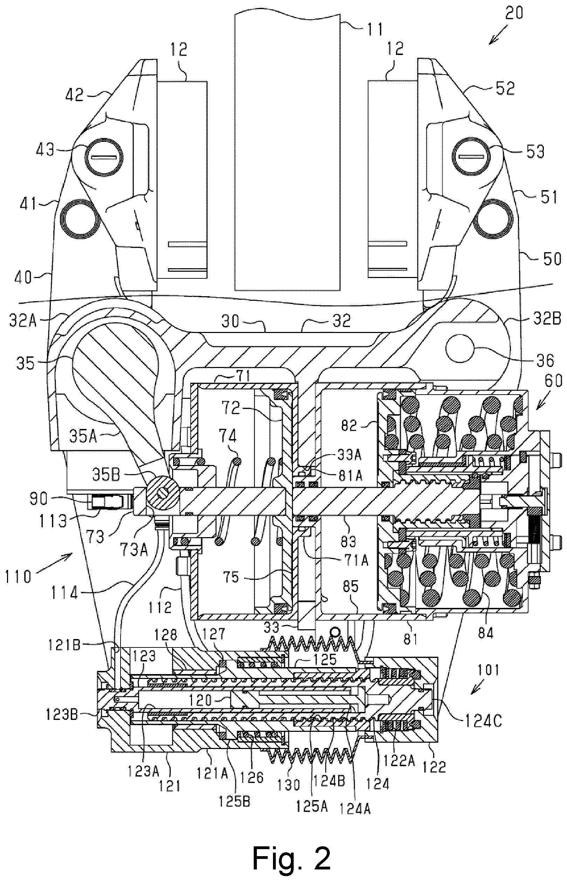

As shown in Figs. 1 and 2, a brake caliper 20 is mounted to a bogie (not shown) of a railroad car and configured to apply a braking force to a wheel of the bogie by pressing brake pads 12 against a disc 11 (see Fig. 2) that rotates integrally with an axle for rotating the wheel. The brake caliper 20 forms a disc brake device together with the disc 11.

The brake caliper 20 includes a bracket 21 (see Fig. 1) mounted to the bogie, a coupling member 30 swingably suspended to the bracket 21, and a pair of left and right arms 40, 50 retained to the coupling member 30. The coupling member 30 retains the left and right arms 40, 50 operatively such that the brake pads 12 can move to positions for sandwiching the disc 11 and positions not for sandwiching the disc 11. The coupling member 30 corresponds to a suspended portion.

The brake caliper 20 also includes a cylinder device 60 for outputting a force with a compressed air fed and discharged such that the left arm 40 and the right arm 50 sandwich the disc 11 via the brake pads 12. The compressed air fed to the cylinder device 60 is taken from a tank installed on the railroad car. The cylinder device 60 is removably mounted to the coupling member 30. The cylinder device 60 corresponds to a brake cylinder.

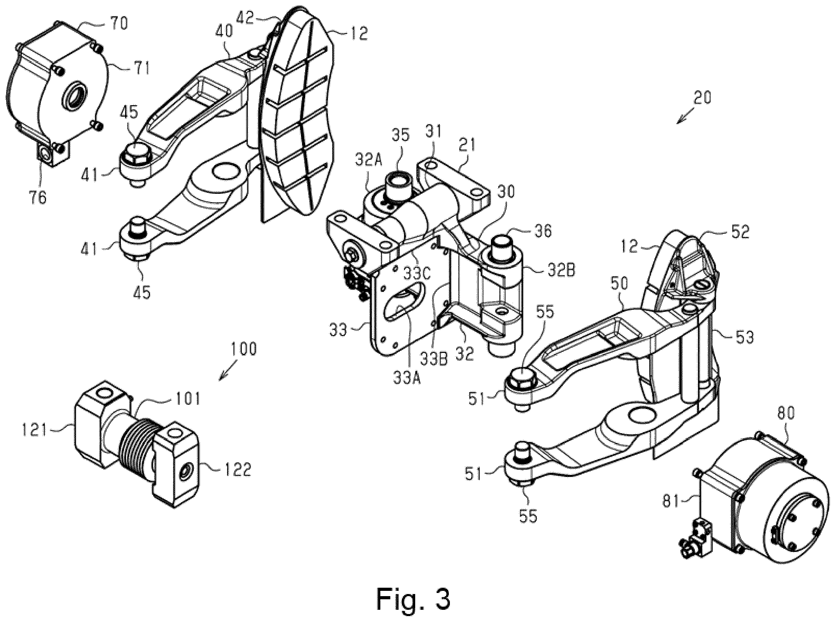

As shown in Fig. 3, the coupling member 30 includes a base portion 31 penetrated by a pivot shaft of the bracket 21. The pivot shaft extends orthogonally to the axial direction of an axle of the bogie and along the extension direction of the left arm 40 and the right arm 50, and the base portion 31 swings about the pivot shaft. The coupling member 30 includes a first support portion 32 that extends from the lower portion of the base portion 31 toward the left arm 40 and the right arm 50 to support the left arm 40 and the right arm 50. The coupling member 30 also includes a second support portion 33 that extends rearward in the longitudinal direction of the left arm 40 and the right arm 50 from the middle of the first support portion 32 to support the cylinder device 60. The first support portion 32 corresponds to a rotation support portion. The second support portion 33 is a rectangular plate-shaped member and corresponds to a plate portion. The second support portion 33 has a first side 33B on the brake pads 12 side in the longitudinal direction of the left arm 40 and the right arm 50, and the first side 33B is connected with the first support portion 32. The first side 33B of the second support portion 33 is positioned at the middle of the first support portion 32 in the lateral direction thereof and is connected with the first support portion 32 along the traveling direction and the vertical direction orthogonal to the axial direction of the axle. The second support portion 33 has a second side 33C positioned on the upper side of the second support portion 33. The second side 33C is connected with the base portion 31. The second side 33C of the second support portion 33 is connected with a lower portion of the base portion 31 along the extension direction of the base portion 31. The base portion 31, the first support portion 32, and the second support portion 33 of the coupling member 30 are formed in one piece. When the bogie is tilted in the axial direction of the axle, the coupling member 30 swings about the pivot shaft, and therefore, the brake pads 12 can be retained in parallel with the disc 11 constantly.

A left support portion 32A for supporting the left arm 40 is provided on the left side of the first support portion 32. The left support portion 32A is penetrated by a left rotating shaft 35 that is rotatable relative to the left support portion 32A, and the left rotating shaft 35 rotatably supports the left arm 40. To the left rotating shaft 35, there is fixed an operation lever 35A that is operated by the driving force of the cylinder device 60. A right support portion 32B for supporting the right arm 50 is provided on the right side of the first support portion 32. The right support portion 32B is penetrated at its upper side and lower side by a right rotating shaft 36 that is rotatable relative to the right support portion 32B, and the right rotating shaft 36 rotatably supports the right arm 50.

The left arm 40 includes a pair of left extension pieces 41 extending so as to be spaced from and opposed to each other in the axial direction of the left rotating shaft 35. To the distal end of the left arm 40, there is connected a brake shoe attachment member 42 via a brake shoe rotating shaft 43, and a brake pad 12 is attached to the brake shoe attachment member 42. The brake shoe rotating shaft 43 is rotatable relative to the left extension pieces 41. The brake shoe rotating shaft 43 is fixed to the brake shoe attachment member 42.

The right arm 50 includes a pair of right extension pieces 51 extending so as to be spaced from and opposed to each other in the axial direction of the right rotating shaft 36. To the distal end of the right arm 50, there is connected a brake shoe attachment member 52 via a brake shoe rotating shaft 53, and a brake pad 12 is attached to the brake shoe attachment member 52. The brake shoe rotating shaft 53 is rotatable relative to the right extension pieces 51. The brake shoe rotating shaft 53 is fixed to the brake shoe attachment member 52.

As shown in Fig. 2, the cylinder device 60 is mounted to the second support portion 33 of the coupling member 30. The cylinder device 60 includes a service brake cylinder 70 and a parking brake cylinder 80. The surfaces of the second support portion 33 to which the service brake cylinder 70 and the parking brake cylinder 80 are mounted are perpendicular to the axle. The service brake cylinder 70 is mounted to the left-side surface of the second support portion 33 of the coupling member 30. The parking brake cylinder 80 is mounted to the right-side surface of the second support portion 33 of the coupling member 30. Therefore, the service brake cylinder 70 and the parking brake cylinder 80 are disposed to sandwich the second support portion 33 of the coupling member 30. The surfaces of the second support portion 33 to which the service brake cylinder 70 and the parking brake cylinder 80 are mounted are parallel with the extension direction of the left arm 40 and the right arm 50 and are parallel with the surfaces of the brake pads 12.

As shown in Fig. 3, each of the service brake cylinder 70 and the parking brake cylinder 80 is fixed to the second support portion 33 with four bolts. The service brake cylinder 70 and the parking brake cylinder 80 are bolted to difference positions in the second support portion 33. Therefore, the service brake cylinder 70 and the parking brake cylinder 80 can be mounted to and removed from the second support portion 33 separately. The second support portion 33 of the coupling member 30 has an opening 33A formed in the middle of the second support portion 33. The opening 33A is elongated in the longitudinal direction of the left arm 40 and the right arm 50. Therefore, in mounting and removing the service brake cylinder 70 and the parking brake cylinder 80, the service brake cylinder 70 and the parking brake cylinder 80 can be moved in the opening 33A in the longitudinal direction of the left arm 40 and the right arm 50. Specifically, in mounting the service brake cylinder 70 and the parking brake cylinder 80, a first cylinder chamber 71 and a second cylinder chamber 81 can be fit together in the gap adjusting device 100 side of the opening 33A, before these cylinder chambers are moved to the brake pad 12 side of the opening 33A. On the other hand, in removing the service brake cylinder 70 and the parking brake cylinder 80, the first cylinder chamber 71 and the second cylinder chamber 81 can be moved from the brake pad 12 side of the opening 33A to the gap adjusting device 100 side of the opening 33A, before these cylinder chambers are separated from each other. Any number of bolts may be used to fix the cylinder device 60.

As shown in Fig. 2, the service brake cylinder 70 includes the first cylinder chamber 71, a first piston 72, a first rod 73, and a first spring 74. The first piston 72 moves within the first cylinder chamber 71. The first rod 73 is fixed to the first piston 72 and projected from the first cylinder chamber 71. The first spring 74 biases the first piston 72 in such a direction as to place the first rod 73 into the first cylinder chamber 71. The space in the first cylinder chamber 71 not including the first spring 74 is referred to as the first space 75. The service brake cylinder 70 includes a first feeding port 76 for feeding a compressed air into the first space 75 of the first cylinder chamber 71. The first feeding port 76 is provided outside the first cylinder chamber 71. In the service brake cylinder 70, a compressed air fed into the first space 75 of the first cylinder chamber 71 presses the first piston 72, such that the first rod 73 is projected. In the service brake cylinder 70, when the compressed air is discharged from the first space 75 of the first cylinder chamber 71, the first piston 72 is presses by the first spring 74, such that the first rod 73 is placed into the first cylinder 71. The first rod 73 corresponds to an output shaft of the service brake cylinder 70. The first cylinder chamber 71 corresponds to a casing of the service brake cylinder 70.

The parking brake cylinder 80 includes the second cylinder chamber 81, a second piston 82, a second rod 83, and a second spring 84. The second piston 82 moves within the second cylinder chamber 81. The second rod 83 is fixed to the second piston 82 and projected from the second cylinder chamber 81 into the first cylinder chamber 71. The second spring 84 biases the second piston 82 in such a direction as to project the second rod 83 from the second cylinder chamber 81. The space in the second cylinder chamber 81 not including the second spring 84 is referred to as the second space 85. The parking brake cylinder 80 includes a second feeding port 86 (see Fig. 1) for feeding a compressed air into the second space 85 of the second cylinder chamber 81. The second feeding port 86 is provided outside the second cylinder chamber 81. In the parking brake cylinder 80, a compressed air fed into the second space 85 of the second cylinder chamber 81 presses the second piston 82, such that the second rod 83 is placed into the second cylinder 81. In the parking brake cylinder 80, when the compressed air is discharged from the second space 85 of the second cylinder chamber 81, the second piston 82 is presses by the second spring 84, such that the second rod 83 is projected from the second cylinder chamber 81 into the first cylinder chamber 71 to press the first piston 72, and thus the first rod 73 is projected. The second rod 83 corresponds to an output shaft of the parking brake cylinder 80. The second cylinder chamber 81 corresponds to a casing of the parking brake cylinder 80.

The first cylinder chamber 71 includes a first projecting portion 71A that projects into the opening 33A. The second cylinder chamber 81 includes a second projecting portion 81A that projects into the opening 33A. The second projecting portion 81A is penetrated by the second rod 83. The first projecting portion 71A is fitted around the second projecting portion 81A. Therefore, the first rod 73 of the service brake cylinder 70 and the second rod 83 of the parking brake cylinder 80 are positioned coaxially, and the output of the parking brake cylinder 80 is transmitted to the service brake cylinder 70.

A roller that rotates is attached to the distal end of the operation lever 35A. The first rod 73 of the cylinder device 60 includes a receiving portion 73A provided in the distal end of the first rod 73. The receiving portion 73A is a through-hole that receives and contacts the roller 35B. The receiving portion 73A transmits the driving force of the first rod 73 to the operation lever 35A, while absorbing the lag between the linear movement of the first rod 73 and the rotational movement of the operation lever 35A.

As shown in Figs. 1 and 2, the brake caliper 20 includes a gap adjusting device 100 for adjusting the gaps between the brake pads 12 and the disc 11. The gap adjusting device 100 includes a gap adjuster 101 and a sensing switch 90. The gap adjuster 101 adjusts the gaps, and the sensing switch 90 is a sensing unit that senses the amount of movement of the first rod 73 of the cylinder device 60. The gap adjuster 101 connects between the proximal end portion of the left arm 40 and the proximal end portion of the right arm 50. The left arm 40 and the gap adjuster 101 are rotatably coupled with each other with a pair of bolts 45 opposed vertically. The right arm 50 and the gap adjuster 101 are rotatably coupled with each other with a pair of bolts 55 opposed vertically. The left arm 40 and the gap adjuster 101 rotate about a rotational axis 44, and the right arm 50 and the gap adjuster 101 rotate about a rotational axis 54.

The gap adjuster 100 adjusts the distance between the proximal end portion of the left arm 40 and the proximal end portion of the right arm 50 to adjust the gaps between the brake pads 12 and the disc 11. Further, when the gaps between the brake pads 12 and the disc 11 is enlarged due to wear of the brake pads 12, the gap adjusting device 100 increases the distance between the proximal end portion of the left arm 40 and the proximal end portion of the right arm 50, thereby reducing the distance between the brake pads 12 and the disc 11.

The gap adjusting device 100 includes a feeding unit 110. When the sensing switch 90 has sensed that the amount of movement of the first rod 73 is equal to or larger than a predetermined value, the feeding unit 110 actuates the gap adjuster 101 using energy fed externally of the cylinder device 60. The feeding unit 110 feeds to the gap adjuster 101 the compressed air fed to the cylinder device 60 as the energy. The feeding unit 110 includes a branching portion 111 in which the conduit for the compressed air fed to the cylinder device 60 branches for feeding it to the gap adjuster 101. The branching portion 111 is mounted to the second feeding port 86 disposed at an outside of the second cylinder chamber 81, and branching portion 111 branches the flow of the compressed air before it is fed from the second feeding port 86 to the second cylinder chamber 81. Since the gap adjusting device 100 uses the energy fed externally of the cylinder device 60 to actuate the gap adjuster 101, the driving force of the cylinder device 60 can be used solely for operation of the brake caliper 20. This results in a smaller loss of the driving force of the cylinder device 60 and inhibits reduction of the transmission efficiency of the driving force.

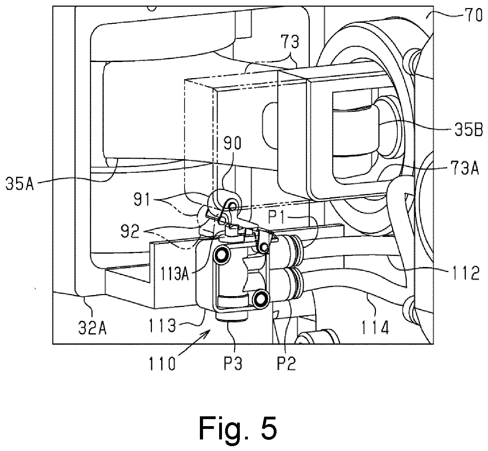

As shown in Fig. 5, the sensing switch 90 is a switch for sensing that the first rod 73 has moved by a predetermined amount when the first rod 73 contacts the sensing switch 90. The sensing switch 90 includes a roller 91 and a support portion 92. The roller 91 is contacted by the first rod 73 when the first rod 73 has moved by a predetermined amount or more, and the support portion 92 supports the roller 91 and rotates when the roller 91 is contacted by the distal end portion of the first rod 73. The support portion 92 is caused to rotate by contact between the distal end portion of the first rod 73 and the roller 91 when the first rod 73 has moved by a predetermined amount or more.

The sensing switch 90 has mounted thereto a mechanical valve 113 serving as a feeding unit. The mechanical valve 113 is a three-port mechanical valve that can be switched between feeding of the compressed air to the gap adjuster 101 and discharging of the compressed air from the gap adjuster 101. The mechanical valve 113 includes an input port P1, an output port P2, and a discharge port P3. The input port P1 receives the compressed air from the branching portion 111, the output port P2 outputs the compressed air input through the input port P1, and the discharge port P3 discharges to the outside the compressed air output through the output port P2. The input port P1 of the mechanical valve 113 and the branching portion 111 are connected with each other via a first hose 112 having a high flexibility. The output port P2 of the mechanical valve 113 and the gap adjuster 101 are connected with each other via a second hose 114 having a high flexibility. The output port P2 operates as a feeding unit.

The mechanical valve 113 is switched between On state and Off state by operation of the sensing switch 90. Specifically, the mechanical valve 113 includes a switch 113A. When the support portion 92 of the sensing switch 90 rotates and presses the switch 113A, the mechanical valve 113 opens communication between the input port P1 and the output port P2 and feeds the compressed air to the gap adjuster 101 (feeding state). When the support portion 92 of the sensing switch 90 no longer presses the switch 113A, the mechanical valve 113 closes communication between the input port P1 and the output port P2 and opens communication between the output port P2 and the discharge port P3, thereby discharging through the discharge port P3 the compressed air fed to the gap adjuster 101 (discharging state). In other words, the sensing switch 90 puts the mechanical valve 113 into the feeding state when the first rod 73 has moved by a predetermined amount or more, and the sensing switch 90 puts the mechanical valve 113 into the discharging state when the first rod 73 returns. The sensing switch 90 directly switches the mechanical valve 13 between the feeding state and the discharging state.

As shown in Fig. 2, the gap adjuster 101 includes a first casing 121 and a second casing 122. The first casing 121 connects between the respective proximal end portions of the pair of left extension pieces 41. The first casing 121 and the pair of left extension pieces 41 are rotatably coupled with each other with a bolt 45. The second casing 122 connects between the respective proximal end portions of the pair of right extension pieces 51. The second casing 122 and the pair of right extension pieces 51 are rotatably coupled with each other with a bolt 55. The portion between the first casing 121 and the second casing 122 is covered by a cover 130 shaped like a bellows.

The first casing 121 includes an extension portion 121A having a cylindrical shape and extending toward the second casing 122. A polygonal rod 123 shaped like a polygonal column is fixed to the first casing 121. The polygonal rod 123 has a cylindrical space 123A formed therein. The space 123A extends in the extension direction of the extension portion 121A of the first casing 121 and is open at the second casing 122 side only. The space 123A in the polygonal rod 123 receives a drive piston 120 inserted therein. The drive piston 120 projects from the polygonal rod 123 toward the second casing 122. When the compressed air is fed to the closed side of the space 123A in the polygonal rod 123, the drive piston 120 is pressed in such a direction as to project from the polygonal rod 123.

The first casing 121 includes an air passage 121B that is connected with the second hose 114, which is connected with the output port P2 of the mechanical valve 113. The compressed air output from the mechanical valve 113 passes through the air passage 121B. The air passage 121B corresponds to a flow passing portion. The air passage 121B is connected with the polygonal rod 123. The proximal end portion of the polygonal rod 123 projects to the outside of the first casing 121. The proximal end portion of the polygonal rod 123 includes a hexagonal portion 123B shaped like a hexagonal column. The hexagonal portion 123B of the polygonal rod 123 can be manually rotated to adjust the gaps between the brake pads 12 and the disc 11.

A cylindrical screw shaft 124 shaped like a cylinder and extending toward the first casing 121 is fixed to the second casing 122. The screw shaft 124 has a cylindrical space 124A formed therein. The space 124A is open at the first casing 121 side only. The space 124A in the screw shaft 124 receives the polygonal rod 123 and the drive piston 120 inserted therein. The drive piston 120 contacts the bottom surface of the space 124A in the screw shaft 124. The outer periphery of the screw shaft 124 has an external thread at the portion other than the portion fixed to the second casing 122. The screw shaft 124 is supported by a support spring 122A. The proximal end portion of the screw shaft 124 includes a hexagonal portion 124C shaped like a hexagonal column. The hexagonal portion 124C of the screw shaft 124 can be manually rotated to adjust the gaps between the brake pads 12 and the disc 11. Therefore, the gaps can be adjusted on both sides of the gap adjuster 101 and thus can be adjusted by a large amount at one time, resulting in an increased efficiency and ease of an adjustment work in maintenance.

An adjustment nut 125 shaped like a cylinder is provided on the outer periphery of the screw shaft 124. A part of the inner wall of the adjustment nut 125 has an internal thread 125A that engages with the external thread 124B of the screw shaft 124. The adjustment nut 125 rotates relative to the screw shaft 124 while engaging with the external thread 124B of the screw shaft 124. Specifically, when the drive piston 120 of the polygonal rod 123 presses the screw shaft 124 such that the screw shaft 124 moves away from the polygonal rod 123, the adjustment nut 125 rotates by the external thread 124B of the screw shaft 124 and the internal thread 125A of the adjustment nut 125. The screw shaft 124 and the adjustment nut 125 operate as an elongation portion that elongates in the axial direction.

The adjustment nut 125 is positioned between the extension portion 121A of the first casing 121 and the screw shaft 124. The outer periphery of the adjustment nut 125 has a ridge 125B provided thereon. The ridge 125B projects toward the inner wall of the extension portion 121A of the first casing 121. Between the adjustment nut 125 and the extension portion 121A of the first casing 121, there is provided an anti-vibration spring 126 that biases the ridge 125B toward the first casing 121 side in the axial direction of the adjustment nut 125. The anti-vibration spring 126 is formed of a coil spring and is provided on the outer periphery of the adjustment nut 125. Since the ridge 125B of the adjustment nut 125 is biased by the anti-vibration spring 126, the effect of vibration can be reduced. A contact clutch 127 is provided between the adjustment nut 125 and the extension portion 121A of the first casing 121, When the ridge 125B is pressed toward the left arm 40 in the axial direction, the contact clutch 127 contacts the surface of the ridge 125B that is perpendicular to the axial direction to control rotation of the adjustment nut 125. Further, a one-way clutch 128 is provided between the adjustment nut 125 and the extension portion 121A of the first casing 121, The one-way clutch 128 permits rotation of the adjustment nut 125 for elongation of the gap adjuster 101 and controls rotation of the adjustment nut 125 for shortening of the gap adjuster 101. The contact clutch 127 and the one-way clutch 128 operate as an elongation portion that controls shortening in the axial direction.

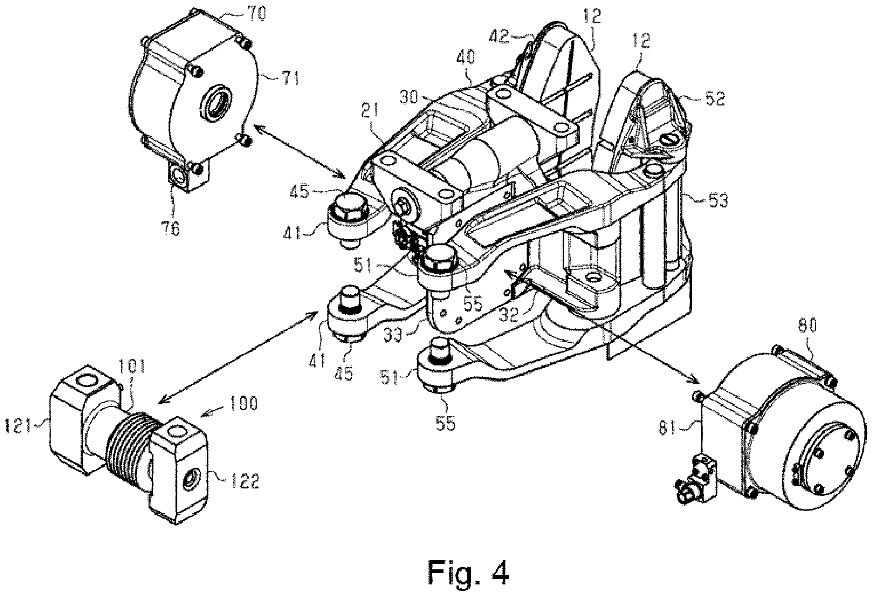

As shown in Fig. 4, the service brake cylinder 70 can be removed from the left-side surface of the second support portion 33 of the coupling member 30 by removing the four bolts. The parking brake cylinder 80 can be removed from the right-side surface of the second support portion 33 of the coupling member 30 by removing the four bolts. The gap adjusting device 100 can be removed from the left arm 40 and the right arm 50 by removing the bolt 45 and the bolt 55. Therefore, the cylinder device 60 and the gap adjusting device 100 can be readily removed and mounted for inspection and replacement.

Next, the operation of the brake caliper 20 will now be described. With additional reference to Fig. 2, a description is given of the operation of the brake caliper 20 and the gap adjusting device 100 performed before the brake pads 12 are worn.

As shown in Fig. 2, the brake caliper 20 is configured such that a compressed air is fed into the first space 75 of the service brake cylinder 70 of the cylinder device 60 to actuate the service brake. The first rod 73 of the service brake cylinder 70 moves in such a direction as to project from the first cylinder chamber 71 along with the first piston 72, thereby driving the operation lever 35A clockwise via the roller 35B. At this time, if the friction of the brake pads 12 is small and the amount of movement of the first rod 73 is less than a predetermined value, the distal end portion of the operation lever 35A does not contact the roller 91 of the sensing switch 90.

When the first rod 73 moves in such a direction as to project from the first cylinder chamber 71, the operation lever 35A rotates clockwise along with the left rotating shaft 35. The clockwise rotation of the left rotating shaft 35 causes the left arm 40 to rotate about the rotational axis 44 in such a direction that the left brake pad 12 contacts the disc 11, and thus the left brake pad 12 contacts the disc 11.

Subsequently, after the left brake pad 12 contacts the disc 11, the left arm 40 rotates clockwise about the brake shoe rotating shaft 43. When the left arm 40 rotates about the brake shoe rotating shaft 43, the right arm 50 rotates clockwise about the right rotating shaft 36 via the rotational axis 44, the gap adjuster 101, and the rotational axis 54, and the right brake pad 12 contacts the disc 11.

When the compressed air is discharged from the second space 85 of the parking brake cylinder 80 and the second rod 83 projects from the second cylinder chamber 81, the second rod 83 presses the first piston 72 and the first rod 73, resulting in the same operation as when the first rod 73 projects from the first cylinder chamber 71.

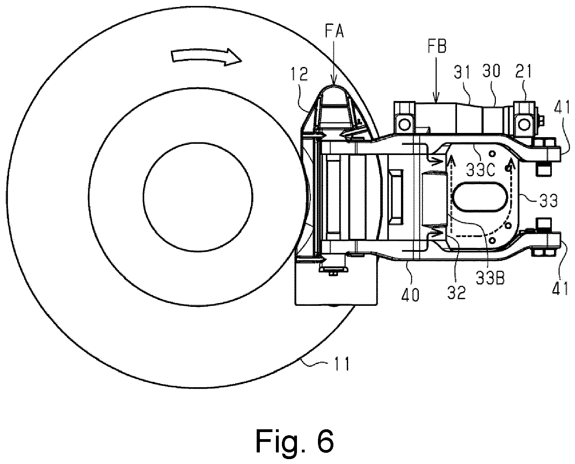

For convenience of explanation, Fig. 6 does not show the cylinder device 60 and the gap adjusting device 100, such that the second support portion 33 of the coupling member 30 is seen from its side.

As shown in Fig. 6, when the brake pads 12 contact the disc 11 rotating clockwise to generate a braking force, the brake pads 12 receive a downward force FA. The downward force received by the brake pads 12 is transmitted through the left arm 40 and the right arm 50 of the brake caliper 20 to the first support portion 32 via the left support portion 32A and the right support portion 32B of the first support portion 32, and this downward force is received by the first side 33B of the second support portion 33 and thus input to the second support portion 33. The force input to the second support portion 33 is transmitted to the base portion 31 via the second side 33C of the second support portion 33, and thus the downward force FB is received by the base portion 31. Therefore, the second support portion 33 can have a high section modulus and thus can have a high rigidity. In addition, the second support portion 33 can have a small weight.

If the second support portion 33 is absent, the base portion 31 and the first support portion 32 are connected with each other only at the upper middle portion of the first support portion 32 and a part of the lower portion of the base portion 31. In this case, the force transmitted from the brake pads 12 during a braking operation is received by only a part of the base portion 31. A high rigidity is thus required in the connection portion between the base portion 31 and the first support portion 32. If the brake cylinders, the base portion 31, and the first support portion 32 are integrated together, the brake cylinders connect between the base portion 31 and the first support portion 32. On the other hand, in this embodiment that facilitates mounting and removal of the brake cylinders, the second support portion 33 connects between the base portion 31 and the first support portion 32, thereby increasing the rigidity.

Next, with additional reference to Fig. 3, a description is given of the operation of the brake caliper 20 and the gap adjusting device 100 performed when the brake pads 12 are worn. When the brake pads 12 are worn, the service brake cylinder 70 also operates in the same manner with a compression air fed thereto, and the amount of movement of the first rod 73 increases with the amount of wear of the brake pads 12. When the amount of wear of the brake pads 12 increases until the amount of movement of the first rod 73 is equal to or larger than a predetermined value, the gap adjusting device 100 operates. Specifically, the gap adjuster 101 is elongated to shorten the gaps between the brake pads 12 and the disc 11.

When the first rod 73 has moved by a predetermined amount or more, the distal end portion of the first rod 73 contacts the roller 91 of the sensing switch 90, and the support portion 92 rotates and thereby presses the switch 113A of the mechanical valve 113. When the switch 113A is pressed and the mechanical valve 113 is put into the feeding state, the mechanical valve 113 opens communication between the input port P1 and the output port P2 and feeds the compressed air to the gap adjuster 101 via the second hose 114. The condition that the amount of movement of the first rod 73 is equal to or larger than a predetermined value corresponds to the condition that the gaps between the brake pads 12 and the disc 11 are equal to or larger than a prescribed value.

The compressed air fed to the gap adjuster 101 flows through the air passage 121B of the first casing 121 into the space 123A of the polygonal rod 123 to drive the drive piston 120. Since the drive piston 120 being driven presses the screw shaft 124 in such a direction as to elongate the gap adjuster 101, the screw shaft 124 moves away from the first casing 121. Therefore, as the screw shaft 124 moves in the axial direction, the adjustment nut 125 rotates by the threadable engagement between the external thread 124B of the screw shaft 124 and the internal thread 125A of the adjustment nut 125, and the screw shaft 124 is delivered from the adjustment nut 125 in the direction for the elongation. At this time, since the one-way clutch 128 permits rotation in the direction for the elongation, the adjustment nut 125 rotates. This enlarges the entire length of the gap adjuster 101, resulting in a larger distance between the proximal end portion of the left arm 40 and the proximal end portion of the right arm 50 and smaller gaps between the brake pads 12 and the disc 11.

Subsequently, in the brake caliper 20, when the left brake pad 12 and the right brake pad 12 sandwich the disc 11 to generate a compressive force in the gap adjuster 101, the screw shaft 124 acts to rotate the adjustment nut 125 in the direction for shortening. At this time, the rotation of the adjustment nut 125 is controlled by the frictional force between the contact clutch 127 and the ridge 125B of the adjustment nut 125 and by the one-way clutch 128. Therefore, the screw shaft 124 does not move in the direction for shortening, and the sandwiching force of the brake caliper 20 is maintained, thus generating a braking force.

Subsequently, in the brake caliper 20, when feeding of the compressed air to the service brake cylinder 70 is stopped to release the brake, the first rod 73 returns to the first cylinder chamber 71. The first rod 73 no longer contacts the switch 113A of the mechanical valve 113, and the switch 113A is put into the discharging state, in which the communication between the input port P1 and the output port P2 is closed, and the communication between the output portion P2 and the discharge port P3 is opened. The compressed air in the gap adjuster 101 is discharged from the discharge port P3, removing the drive force of the drive piston 120 and stopping the gap adjusting operation. The gaps between the brake pads 12 and the disc 11 are maintained at a predetermined value.

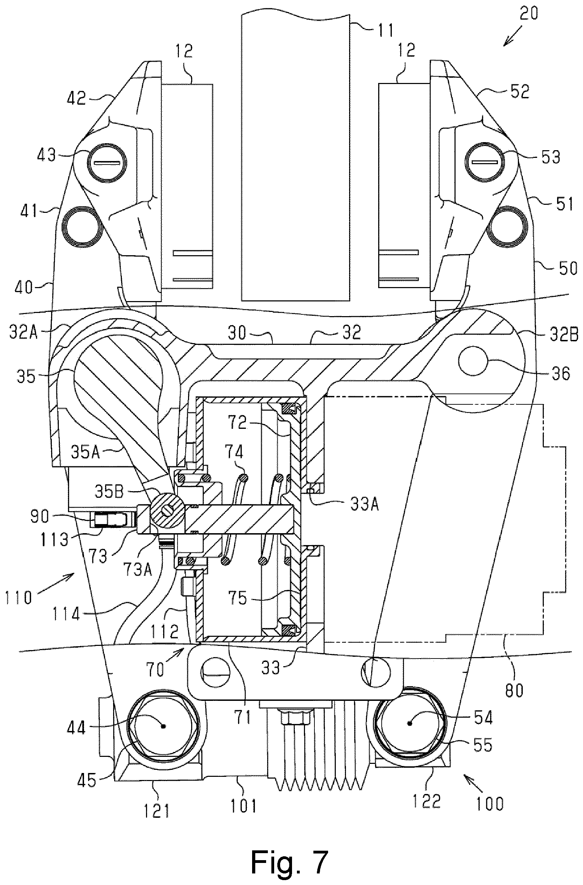

As shown in Fig. 7, the service brake cylinder 70 and the parking brake cylinder 80 are disposed to sandwich the second support portion 33 of the coupling member 30, and each of the service brake cylinder 70 and the parking brake cylinder 80 is fixed to the second support portion 33 with four bolts. Therefore, if the cylinder device 60 does not include the parking brake cylinder 80, it can serve as the service brake cylinder 70 only.

Advantageous effects of the first embodiment will be now described.
(1) Each of the service brake cylinder 70 and the parking brake cylinder 80 can be mounted to the coupling member 30 in the form of a cylinder. Therefore, it is not necessary to mount or remove each of the components of the brake cylinders, thus facilitating the mounting and removing works.
(2) In braking operation, the force transmitted via the left and right arms 40, 50 is input through the first side 33B of the second support portion 33 on the brake pads 12 side, transmitted to the second side 33C on the upper side of the second support portion 33, and output to the base portion 31. Therefore, the base portion 31 and the first support portion 32 are connected together along with the second support portion 33. This results in a higher section modulus than in a coupling member in which only the base portion 31 and the first support portion 32 are connected with each other without connection with the first side 33B and the second side 33C, thus increasing the rigidity of the coupling member 30. In addition, the coupling member 30 can have a smaller weight.
(3) The service brake cylinder 70 and the parking brake cylinder 80 are mounted to the opposite surfaces of the second support portion 33 that constitutes a plate portion of the coupling member 30. Therefore, the service brake cylinder 70 and the parking brake cylinder 80 can be mounted to and removed from the second support portion 33 separately, thus facilitating the mounting and removing works.
(4) The first cylinder chamber 71 of the service brake cylinder 70 and the second cylinder chamber 81 of the parking brake cylinder 80 are fitted together. Therefore, the positions of the service brake cylinder 70 and the parking brake cylinder 80 can be fixed relative to each other, and the first rod 73 and the second rod 83 of these brake cylinders can be positioned coaxially.
(5) The output of the parking brake cylinder 80 is transmitted to the service brake cylinder 70 through the opening 33A in the second support portion 33 of the coupling member 30. Therefore, when there is no output from the parking brake cylinder 80, it is possible that only the service brake cylinder 70 transmits a force to the left arm 40.

### Second Embodiment

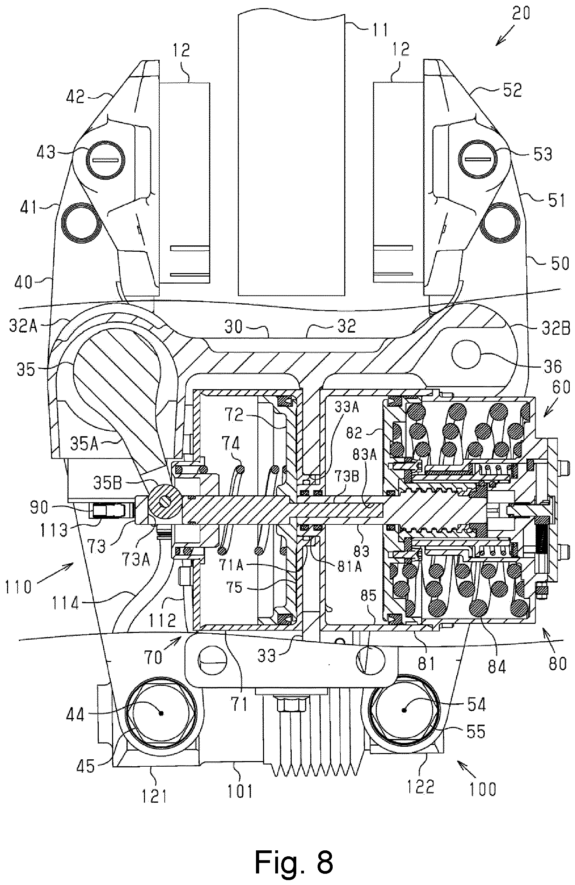

With reference to Fig. 8, a brake caliper of a second embodiment according to the present invention will now be described. The brake caliper of this embodiment is different from that of the first embodiment in the connection between the first rod 73 of the service brake cylinder 70 and the second rod 83 of the parking brake cylinder 80. The following description will be focused on the differences from the first embodiment.

As shown in Fig. 8, in the service brake cylinder 70, the first rod 73 projects from both ends of the first cylinder chamber 71. The first rod 73 includes a fitting portion 73B that penetrates the first piston 72 and fits with the second rod 83 of the parking brake cylinder 80. The portion of the first rod 73 in which the roller 35B of the operation lever 35A is fitted corresponds to an output shaft of the first rod 73. The fitting portion 73B corresponds to an input shaft of the first rod 73.

The second rod 83 of the parking brake cylinder 80 has a fitting hole 83A formed on the service brake cylinder 70 side. The fitting portion 73B of the first rod 73 of the service brake cylinder 70 is fitted in the fitting hole 83A of the second rod 83 of the parking brake cylinder 80. The fitting portion 73B of the first rod 73 and the fitting hole 83A of the second rod 83 that are fitted together penetrate the opening 33A and is supported by the second support portion 33.

The first rod 73 of the service brake cylinder 70 configured as described above is supported at two opposite points: one is the portion of the first cylinder chamber 71 on the operation lever 35A side, and the other is the portion of the first cylinder chamber 71 on the opening 33A side. The first rod 73 can move in the axial direction without inclination. Therefore, when the rotational movement of the operation lever 35A is converted into the linear movement of the first rod 73 by the roller 35B and the receiving portion 73A, it can be inhibited that the first rod 73 inclines by the force from the roller 35B. This arrangement inhibits wear of support portions that support the first rod 73 and prolongs the service life, as compared to a single-point support arrangement.

Advantageous effects of the second embodiment will be now described. The following advantageous effects are obtained in addition to the advantageous effects (1) to (5) of the first embodiment.

(6) The portion of the first rod 73 of the service brake cylinder 70 and the portion of the second rod 83 of the parking brake cylinder 80 that are fitted together are supported by the second support portion 33. Therefore, the force of the parking brake cylinder 80 can be reliably transmitted to the first rod 73 of the service brake cylinder 70.

### Other Embodiments

The above embodiments can be modified as described below. The above embodiments and the following modifications can be implemented in combination to the extent where they are technically consistent with each other.

In the second embodiment described above, the fitting portion 73B of the first rod 73 of the service brake cylinder 70 is fitted in the fitting hole 83A of the second rod 83 of the parking brake cylinder 80. It is also possible that the second rod 83 of the parking brake cylinder 80 is fitted in a fitting hole of the first rod 73 of the service brake cylinder 70.

In the above embodiments, the service brake cylinder 70 includes the first projecting portion 71A, and the parking brake cylinder 80 includes the second projecting portion 81A. It is also possible that at least one of the first projecting portion 71A of the service brake cylinder 70 and the second projecting portion 81A of the parking brake cylinder 80 is omitted.

In the above embodiments, the opening 33A in the second support portion 33 of the coupling member 30 is an elongated hole. It is also possible that the opening 33A is a circular hole penetrated by the first projecting portion 71A of the service brake cylinder 70 and the second projecting portion 81A of the parking brake cylinder 80.

In the above embodiments, the first piston 72 and the first rod 73 may be integrated together.

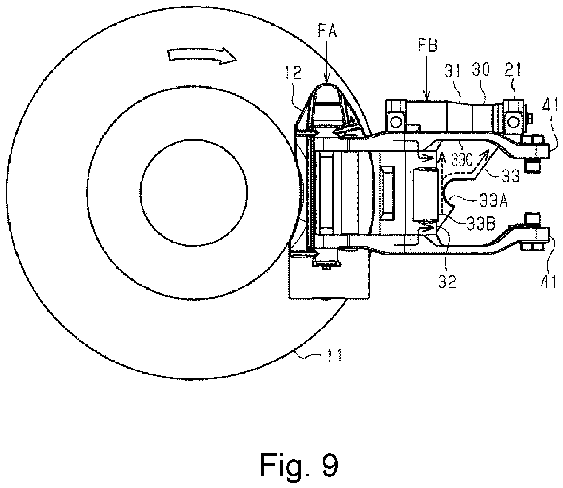

In the above embodiments, the second support portion 33 of the coupling member 30 is a rectangular plate-shaped member. The second support portion 33 of the coupling member 30 may have any shape that has the first side 33B connected with the first support portion 32 and the second side 33C connected with the base portion 31. For example, as shown in Fig. 9, the second support portion 33 of the coupling member 30 may be a triangular plate-shaped member. In this case, the first side 33B on the brake pads 12 side is connected with the first support member 32, and the second side 33C on the upper side of the second support portion 33 is connected with the base portion 31, such that a higher section modulus is likewise obtained as compared to the case where only the base portion 31 and the first support portion 32 are connected together. Specifically, the force received by the brake pads 12 is transmitted through the left arm 40 and the right arm 50 of the brake caliper 20 to the first support portion 32, and this force is input to the second support portion 33 through the first side 33B of the second support portion 33 on the brake pads 12 side. The force input through the first side 33B of the second support portion 33 is output through the second side 33C on the upper side of the second support portion 33 to the base portion 31, and thus the downward force FB is received by the base portion 31.

In the above embodiments, the cylinder device 60 is mounted to the second support portion 33 which is included in the coupling member 30 and having a plate-like shape. The second support portion may also have any other shape that allows the cylinder device 60 to be mounted to the coupling member 30. One example is a second support portion having a part to which the service brake cylinder 70 and the parking brake cylinder 80 can be mounted with bolts. Further, it is also possible that the coupling member 30 does not include the second support portion 33, and each of the service brake cylinder 70 and the parking brake cylinder 80 is mounted directly to the first support portion 32 of the coupling member 30.

In the above embodiments, the sensing switch 90 senses the movement of the first rod 73, and the feeding unit 110 actuates the gap adjuster by the compresses air. It is also possible to provide a component that mechanically connects between the first rod 73 and the gap adjuster such that the movement of the first rod 73 is transmitted to the gap adjuster to actuate the gap adjuster.

In the above embodiment, a braking force is generated by pressing the brake pads 12 against the disc 11 that is mounted to the axle of the bogie and is separate from the wheel. It is also possible to generate the braking force by pressing the brake pads against the wheel mounted to the axle of the bogie or a disc mounted to the wheel.

In the above embodiment, the gap adjuster 101 of the gap adjusting device 100 is actuated by the compressed air. It is also possible that the gap adjuster is actuated by a motor or any other electric driving means.

In the above embodiment, the gap adjuster 101 of the gap adjusting device 100 may be actuated by the driving force of the cylinder 60. In addition, the gap adjuster is not limited to the configuration described above.

## Claims

1. A brake caliper (20) comprising:
a pair of arms (40, 50) each having a brake pad (12) attached to one end thereof;
at least one brake cylinder (60) for outputting a force by which the pair of arms (40, 50) sandwich via the brake pad (12) a disc (11) mounted to an axle of a bogie; and
a suspended portion (30) that retains the pair of arms (40, 50) operatively and is connected with the bogie, wherein the suspended portion (30) includes a rotation support portion (32) that supports each of the pair of arms (40, 50) so as to be rotatable about a respective rotating shaft (35, 36) extending along a vertical direction orthogonal to a traveling direction of the bogie and an axial direction of the axle
wherein
the at least one brake cylinder is removably mounted to the suspended portion (30), and **characterized in that**
the suspended portion (30) further includes:
a base portion (31) that supports the rotation support portion (32) so as to be swingable about a pivot shaft extending orthogonally to the axial direction of the axle of the bogie and along an extension direction of the pair of arms (40, 50); and
a plate portion (33) connecting between a first side (33B) and a second side (33C), the first side (33B) extending on the rotation support portion (32) along an axial direction of the rotating shaft (35, 36), the second side (33C) extending on the base portion (31) along the pivot shaft, the plate portion (33) having the at least one brake cylinder (60) removably mounted thereto.

2. The brake caliper (20) of claim 1, wherein
at least one surface of the plate portion (33) to which the at least one brake cylinder (60) is mounted is perpendicular to the axle,
the at least one brake cylinder (60) includes a service brake cylinder (70) and a parking brake cylinder (80),
the service brake cylinder (70) is mounted to one surface of the plate portion (33), and
the parking brake cylinder (80) is mounted to the other surface of the plate portion (33).

3. The brake caliper (20) of claim 2, wherein
at least one of an output shaft (73) of the service brake cylinder (70) and an output shaft (83) of the parking brake cylinder (80) penetrates an opening (33A) formed in the plate portion (33); and
the output shaft (73) of the service brake cylinder (70) and the output shaft (83) of the parking brake cylinder (80) are positioned coaxially, and an output of the parking brake cylinder (80) is transmitted to the service brake cylinder (70).

4. The brake caliper (20) of claim 3, wherein
a casing (71) of the service brake cylinder (70) and a casing (81) of the parking brake cylinder (80) are fitted together at the opening (33A).

5. The brake caliper (20) of claim 3 or 4, wherein
the output shaft (73) and an input shaft (73B) of the service brake cylinder (70) project from opposite ends of the service brake cylinder (70),
the input shaft (73B) of the service brake cylinder (70) is fitted with the output shaft (83) of the parking brake cylinder (80), and
a portion of the input shaft (73B) of the service brake cylinder (70) and a portion of the output shaft (83) of the parking brake cylinder (80) that are fitted together penetrate the opening (33A) and are supported by the plate portion (33).

## Patentansprüche

1. Ein Bremssattel (20), umfassend:
ein Paar Arme (40, 50), die jeweils einen Bremsklotz (12) an einem Ende davon angebracht aufweisen;
zumindest einen Bremszylinder (60) zum Ausgeben einer Kraft, mit der das Paar Arme (40, 50) über den Bremsklotz (12) eine an einer Achse eines Drehgestells montierte Scheibe (11) einklemmt; und
einen aufgehängten Abschnitt (30), der das Paar von Armen (40, 50) betriebsfähig hält und mit dem Drehgestell verbunden ist, wobei der aufgehängte Abschnitt (30) einen Drehstützabschnitt (32) enthält, der jeden des Paars von Armen (40, 50) so stützt, dass er um eine jeweilige Drehwelle (35, 36) drehbar ist, die sich entlang einer vertikalen Richtung orthogonal zu einer Fahrtrichtung des Drehgestells und einer axialen Richtung der Achse erstreckt,
wobei
der zumindest eine Bremszylinder abnehmbar an dem aufgehängten Teil (30) montiert ist, und **dadurch gekennzeichnet ist, dass**
der aufgehängte Abschnitt (30) ferner enthält:
einen Basisabschnitt (31), der den Drehstützabschnitt (32) so stützt, dass er um eine Schwenkwelle schwenkbar ist, die sich orthogonal zur axialen Richtung der Achse des Drehgestells und entlang einer Erstreckungsrichtung des Paars von Armen (40, 50) erstreckt;
und
einen Plattenabschnitt (33), der zwischen einer ersten Seite (33B) und einer zweiten Seite (33C) verbindet, wobei sich die erste Seite (33B) an dem Drehstützabschnitt (32) entlang einer axialen Richtung der Drehwelle (35, 36) erstreckt, wobei sich die zweite Seite (33C) an dem Basisabschnitt (31) entlang der Schwenkwelle erstreckt, wobei der Plattenabschnitt (33) den zumindest einen Bremszylinder (60) abnehmbar daran montiert aufweist.

2. Der Bremssattel (20) von Anspruch 1, wobei
zumindest eine Oberfläche des Plattenabschnitts (33), an dem der zumindest eine Bremszylinder (60) montiert ist, senkrecht zur Achse steht,
der zumindest eine Bremszylinder (60) einen Betriebsbremszylinder (70) und einen Parkbremszylinder (80) enthält,
der Betriebsbremszylinder (70) an einer Oberfläche des Plattenabschnitts (33) montiert ist, und
der Parkbremszylinder (80) an der anderen Oberfläche des Plattenabschnitts (33) montiert ist.

3. Der Bremssattel (20) von Anspruch 2, wobei
zumindest eine von einer Ausgangswelle (73) des Betriebsbremszylinders (70) und einer Ausgangswelle (83) des Parkbremszylinders (80) in eine in dem Plattenabschnitt (33) ausgebildete Öffnung (33A) durchdringt; und
die Ausgangswelle (73) des Betriebsbremszylinders (70) und die Ausgangswelle (83) des Parkbremszylinders (80) koaxial positioniert sind, und ein Ausgang des Parkbremszylinders (80) auf den Betriebsbremszylinder (70) übertragen wird.

4. Der Bremssattel (20) von Anspruch 3, wobei
ein Gehäuse (71) des Betriebsbremszylinders (70) und ein Gehäuse (81) des Parkbremszylinders (80) an der Öffnung (33A) zusammengepasst sind.

5. Der Bremssattel (20) von Anspruch 3 oder 4, wobei
die Ausgangswelle (73) und eine Eingangswelle (73B) des Betriebsbremszylinders (70) von gegenüberliegenden Enden des Betriebsbremszylinders (70) vorstehen,
die Eingangswelle (73B) des Betriebsbremszylinders (70) mit der Ausgangswelle (83) des Parkbremszylinders (80) zusammengepasst ist, und
ein Abschnitt der Eingangswelle (73B) des Betriebsbremszylinders (70) und ein Abschnitt der Ausgangswelle (83) des Parkbremszylinders (80), die zusammengepasst sind, die Öffnung (33A) durchdringen und von dem Plattenabschnitt (33) gestützt werden.

## Revendications

1. Étrier de frein (20) comprenant :
une paire de bras (40, 50) comportant chacun une plaquette de frein (12) fixée à l'une de leurs extrémités,
au moins un cylindre de frein (60) destiné à délivrer une force grâce à laquelle la paire de bras (40, 50) enserre un disque (11) monté sur l'essieu d'un chariot par l'intermédiaire de la plaquette de frein (12), et
un élément suspendu (30) qui retient fonctionnellement la paire de bras (40, 50) et qui est relié au chariot, l'élément suspendu (30) incluant un organe de support en rotation (32) qui soutient chacun de la paire de bras (40, 50) de sorte à ce qu'ils puissent tourner autour d'un axe tournant (35, 36) respectif s'étendant le long d'une direction verticale qui est orthogonale à la direction de déplacement du chariot et à la direction axiale de l'essieu,
dans lequel le ou les cylindres de frein sont montés en étant démontables sur l'élément suspendu (30), et **caractérisé en ce que** :
l'élément suspendu (30) inclut en outre :
un élément de base (31) qui soutient l'organe de support en rotation (32) de sorte à ce qu'il puisse osciller autour d'un axe de pivot s'étendant de façon orthogonale à la direction axiale de l'essieu du chariot et le long d'une direction d'extension de la paire de bras (40, 50), et
un élément de plaque (33) se raccordant entre un premier côté (33B) et un second côté (33C), le premier côté (33B) s'étendant sur l'organe de support en rotation (32) le long de la direction axiale de l'axe tournant (35, 36), le second côté (33C) s'étendant sur l'élément de base (31) le long de l'axe de pivot, l'élément de plaque (33) comportant le ou les cylindres de frein (60) montés de façon amovible sur celui-ci.

2. Étrier de frein (20) selon la revendication 1, dans lequel :
au moins une surface de l'élément de plaque (33) sur lequel sont montés le ou les cylindres de frein (60) est perpendiculaire à l'essieu,
le ou les cylindres de frein (60) incluent un cylindre de frein de service (70) et un cylindre de frein de stationnement (80),
le cylindre de frein de service (70) est monté sur une première surface de l'élément de plaque (33), et
le cylindre de frein de stationnement (80) est monté sur l'autre surface de l'élément de plaque (33).

3. Étrier de frein (20) selon la revendication 2, dans lequel :
au moins l'un de l'axe de sortie (73) du cylindre de frein de service (70) et de l'axe de sortie (83) du cylindre de frein de stationnement (80) pénètre dans une ouverture (33A) formée dans l'élément de plaque (33), et
l'axe de sortie (73) du cylindre de frein de service (70) et l'axe de sortie (83) du cylindre de frein de stationnement (80) sont positionnés de façon coaxiale et la sortie du cylindre de frein de stationnement (80) est transmise au cylindre de frein de service (70).

4. Étrier de frein (20) selon la revendication 3, dans lequel :
l'enveloppe (71) du cylindre de frein de service (70) et l'enveloppe (81) du cylindre de frein de stationnement (80) sont ajustées ensemble au niveau de l'ouverture (33A).

5. Étrier de frein (20) selon la revendication 3 ou la revendication 4, dans lequel :
l'arbre de sortie (73) et l'arbre d'entrée (73B) du cylindre de frein de service (70) dépassent des extrémités opposées du cylindre de frein de service (70),
l'arbre d'entrée (73B) du cylindre de frein de service (70) est muni de l'arbre de sortie (83) du cylindre de frein de stationnement (80), et
une partie de l'arbre d'entrée (73B) du cylindre de frein de service (70) et une partie de l'arbre de sortie (83) du cylindre de frein de stationnement (80), qui sont ajustées ensemble, pénètrent dans l'ouverture (33A) et sont soutenues par l'élément de plaque (33).
